# DEMANDE DE BREVET EUROPEEN

(11) **EP 4 538 843 A1**
(43) Date de publication de la demande: **16.04.2025**
(21) Numéro de dépôt: 24202610.2
(22) Date de dépôt: 25.09.2024
(51) Int. Cl.: G06F 3/04847, G06T 11/20

(54) **PROCÉDÉ DE GESTION D'UNE INTERFACE GRAPHIQUE UTILISATEUR**

(30) Priorité: 09.10.2023 FR 2310783
(71) Demandeur: Legrand France, 87000 Limoges (FR); Legrand SNC, 87000 Limoges (FR)
(72) Inventeur: PREVOST, Philippe, 87000 Limoges (FR)
(74) Mandataire: Cabinet Camus Lebkiri

(57) **Abrégé**

Un aspect de l'invention concerne un procédé implémenté par ordinateur de gestion d'une interface graphique utilisateur comprenant :
- obtention d'une première fonction, d'une deuxième fonction et d'une troisième fonction, avec :
- la première fonction définissant un premier résultat à partir d'une variable commune,
- la deuxième fonction définissant un deuxième résultat à partir de la variable commune, et
- la troisième fonction définissant un troisième résultat à partir de la variable commune,

- affichage de la première fonction, de la deuxième fonction et de la troisième fonction sous la forme d'une courbe (230), l'affichage de la courbe étant effectué selon les règles suivantes :
- une première coordonnée selon une première dimension (210) d'un point de la courbe est définie selon une valeur du premier résultat,
- une deuxième coordonnée selon une deuxième dimension (220) du point de la courbe est définie selon une valeur du deuxième résultat,
- une distance, en suivant la courbe, entre deux points de la courbe est définie selon une différence entre deux valeurs de la variable commune, et
- une première caractéristique graphique de la courbe est définie selon une valeur du troisième résultat.

- réception d'une première interaction utilisateur de sélection d'un point de la courbe et permettant d'identifier une sélection d'une valeur de la variable commune.

## Description

### DOMAINE TECHNIQUE DE L'INVENTION

Le domaine technique de l'invention est celui de l'ergonomie informatique et en particulier celui de l'ergonomie physique d'une interface graphique utilisateur.

La présente invention concerne un procédé de gestion d'une interface graphique utilisateur.

### ARRIERE-PLAN TECHNOLOGIQUE DE L'INVENTION

Dans le domaine informatique, une interface graphique utilisateur, couramment appelée GUI pour « graphical user interface » en anglais, est généralement formée d'un ensemble d'éléments graphiques, sous forme de pixels, qui est affiché sur un dispositif de visualisation d'un équipement électronique, et avec lequel un ou plusieurs utilisateurs peuvent interagir au moyen de périphériques appropriés. Il est courant de réaliser une telle interface graphique utilisateur au travers d'un dispositif de visualisation du type écran d'ordinateur, équipement mobile (tel qu'un téléphone), table ou tablette interactive, écran tactile, tableau blanc ou encore mur interactif.

L'interface graphique utilisateur permet un dialogue Homme-machine, dans lequel :
- la machine présente des informations, sous une forme intelligible, à l'Homme, et
- l'Homme interagit avec la machine afin de manipuler ces informations.

Il est donc courant de caractériser une interface graphique utilisateur par son ergonomie. Le terme « ergonomie » désigne la capacité d'un produit informatique à être facilement utilisé par une personne pour réaliser la tâche pour laquelle il a été conçu. Cette facilité d'utilisation peut donc concerner l'aspect cognitif, notamment puisque l'interface graphique utilisateur doit être intelligible, c'est-à-dire compréhensible par l'Homme. Dans la présente demande, l'ergonomie d'une interface graphique utilisateur est aussi envisagée d'un point de vue physique, c'est-à-dire en tenant compte des interactions physiologiques de l'Homme et de son activité. Ces interactions physiologiques peuvent en effet être rendues nombreuses et/ou complexes à réaliser. Une interface graphique utilisateur ergonomique est donc une interface graphique utilisateur permettant une interaction utilisateur minimisant notamment le nombre de manipulations, par exemple le nombre d'opérations de clics souris, pour effectuer une tâche. Une interface graphique utilisateur ergonomique est aussi une interface graphique utilisateur minimisant la précision nécessaire, par exemple en distance sur la surface d'affichage, des manipulations de l'interface graphique utilisateur.

Ces dernières années, la domotique a pris une place très importante dans la vie de tous les jours. La domotique est l'ensemble des techniques de l'électronique, de physique du bâtiment, d'automatisme, de l'informatique et des télécommunications utilisées dans les bâtiments, plus ou moins « interopérables » et permettant de contrôler des différents systèmes et sous-systèmes de la maison et de l'entreprise.

La domotique assure des fonctions liées au confort, à la sécurité et à la gestion de l'énergie notamment. La domotique permet donc de contrôler des équipements électriques. Ces équipements électriques sont reliés à une connexion réseau et possèdent sa propre adresse réseau. Ces équipements électriques peuvent donc être commandés à distance. L'interaction utilisateur pour configurer le fonctionnement de ce ou ces équipements électriques est donc un exemple d'utilisation dans lequel l'ergonomie d'une interface graphique utilisateur est particulièrement critique. En effet, l'affichage de l'interface graphique utilisateur peut être effectué sur différents dispositifs de visualisation dont la taille varie grandement. De plus, les moyens d'interaction de l'utilisateur afin de commander ce ou ces équipements électriques peuvent varier suivant le dispositif de visualisation. Enfin, lors de l'interaction entre un utilisateur et un équipement électrique, le nombre de données à afficher sur une interface graphique utilisateur est généralement très important. Il est par exemple fréquent de vouloir commander l'horaire de démarrage d'un équipement électrique. L'horaire de démarrage de l'équipement électrique peut dépendre de nombreux paramètres dont le résultat évolue en fonction de cette heure de démarrage. Ainsi, l'affichage de l'évolution du résultat de ces différents paramètres en fonction de l'horaire de démarrage de l'équipement électrique est primordial pour permettre à l'utilisateur de sélectionner l'horaire de démarrage d'un équipement électrique adaptée à ses besoins.

Il existe donc un besoin de fournir un procédé de gestion d'une interface graphique utilisateur permettant de répondre, au moins partiellement, aux problèmes évoqués précédemment, notamment dans le cas d'un procédé de commande à distance d'un équipement électrique.

### RESUME DE L'INVENTION

L'invention offre une solution aux problèmes évoqués précédemment en permettant l'affichage de trois fonctions ayant une variable commune par une seule courbe sur une interface graphique utilisateur. Chaque point de la courbe a une première coordonnée selon une première dimension qui est définie en fonction d'un premier résultat de la première fonction. Chaque point de la courbe a aussi une deuxième coordonnée selon une deuxième dimension qui est définie en fonction d'un deuxième résultat de la deuxième fonction. De plus, chaque point de la courbe a une première caractéristique graphique qui est définie en fonction d'un troisième résultat de la troisième fonction. Enfin, la distance, le long de la courbe, entre deux points est définie selon une différence entre deux valeurs de la variable commune.

Un aspect de l'invention concerne un procédé implémenté par ordinateur de gestion d'une interface graphique utilisateur comprenant :
- obtention d'une première fonction, d'une deuxième fonction et d'une troisième fonction, avec :
   - la première fonction définissant un premier résultat à partir d'une variable commune,
   - la deuxième fonction définissant un deuxième résultat à partir de la variable commune, et
   - la troisième fonction définissant un troisième résultat à partir de la variable commune,
- affichage de la première fonction, de la deuxième fonction et de la troisième fonction sous la forme d'une seule courbe, l'affichage de la courbe étant effectué selon les règles suivantes :
   - une première coordonnée selon une première dimension d'un point de la courbe est définie selon une valeur du premier résultat,
   - une deuxième coordonnée selon une deuxième dimension du point de la courbe est définie selon une valeur du deuxième résultat,
   - une distance, en suivant la courbe, entre deux points de la courbe est définie selon une différence entre deux valeurs de la variable commune, et
   - une première caractéristique graphique de la courbe est définie selon une valeur du troisième résultat.
- réception d'une première interaction utilisateur de sélection d'un point de la courbe, la première interaction utilisateur permettant d'identifier une sélection d'une valeur de la variable commune.

Grâce à l'invention, l'ergonomie de l'interface graphique utilisateur est optimisée. En effet, le nombre de manipulations afin d'identifier et sélectionner une valeur de la variable commune est réduit. Par exemple, la présentation sous une forme d'une seule courbe permet d'identifier le résultat, pour les trois fonctions, qui correspond à la valeur de la variable commune d'un point de la courbe sans devoir comparer différentes courbes. Ainsi, l'utilisateur économise des manipulations afin de visualiser ces informations à différents emplacements de l'interface graphique. De plus, la sélection d'une valeur de la variable commune est facilitée par le fait que l'ensemble des informations à prendre en compte est représentée par une seule courbe. Ainsi, il suffit d'une unique interaction utilisateur sur un point de la courbe pour permettre une sélection d'une valeur de la variable commune.

Outre les caractéristiques qui viennent d'être évoquées dans les paragraphes précédents, le procédé selon un aspect de l'invention peut présenter une ou plusieurs caractéristiques complémentaires parmi les suivantes, considérées individuellement ou selon toutes les combinaisons techniquement possibles :
- la variable commune est un horaire de démarrage d'un équipement électrique, le procédé comprenant en outre :
   - déterminer l'horaire de démarrage de l'équipement électrique à partir de la sélection de la valeur de la variable commune, et
   - démarrage de l'équipement électrique à l'horaire de démarrage déterminé,
- la première caractéristique graphique de la courbe est une couleur de la courbe et/ou une épaisseur de la courbe et/ou un type de trait de la courbe,
- le procédé comprend, après l'affichage de la première fonction, de la deuxième fonction et de la troisième fonction sous la forme d'une courbe :
   - obtention d'au moins un intervalle de valeurs de la variable commune, et
   - affichage d'au moins une forme géométrique additionnelle définie en fonction du au moins un intervalle de valeurs de la variable commun,
- un zoom sur une partie de l'interface graphique utilisateur, la partie de l'interface graphique utilisateur correspondant à une forme géométrique additionnelle parmi la au moins une forme géométrique additionnelle
- le zoom est :
   - initié automatiquement, et/ou
   - effectué après la réception d'une deuxième interaction utilisateur de sélection d'une forme géométrique additionnelle parmi la au moins une forme géométrique additionnelle,
- le au moins un intervalle de valeurs de la variable commune désigne un au moins un intervalle de temps correspondant aux heures de démarrage préférentielles et/ obligatoires d'un équipement électrique.

Un second aspect de l'invention concerne un système comprenant un moyen d'affichage, un moyen d'interaction utilisateur et des moyens configurés pour mettre en oeuvre un procédé selon l'invention.

Un troisième aspect de l'invention concerne un programme d'ordinateur comprenant des instructions qui, lorsque le programme est exécuté par un ordinateur, conduisent celui-ci à mettre en oeuvre un procédé selon l'invention.

Un quatrième aspect de l'invention concerne un support de données lisible par ordinateur, sur lequel est enregistré un programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un exemple de schéma synoptique illustrant les étapes d'un exemple du procédé selon l'invention
- La figure 2 montre un exemple de représentation schématique d'une interface graphique utilisateur obtenue par le procédé selon l'invention.

### DESCRIPTION DETAILLEE

Sauf précision contraire, un même élément apparaissant sur des figures différentes présente une référence unique.

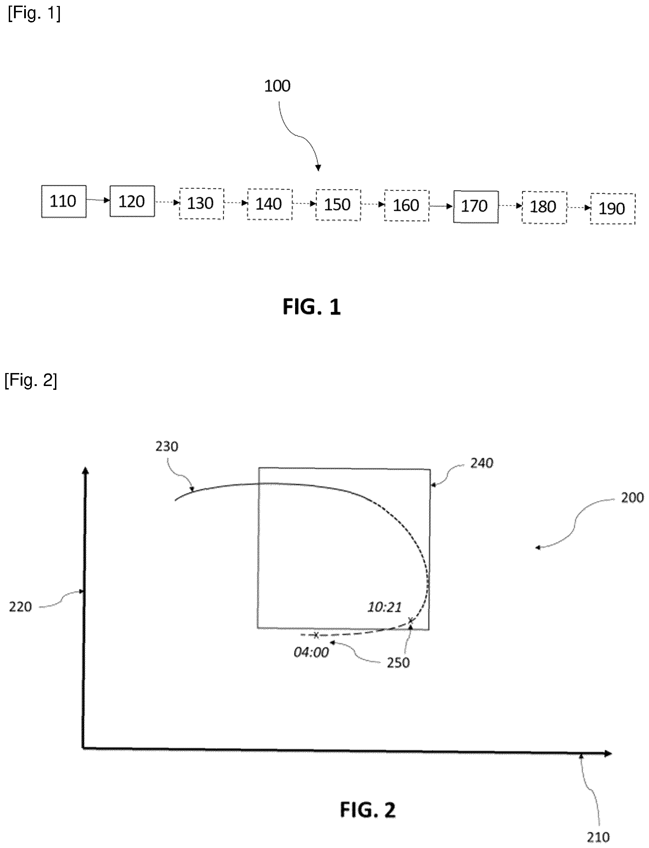

La figure 1 est un schéma synoptique illustrant les étapes d'un exemple du procédé 100 selon l'invention. Les étapes obligatoires de l'exemple du procédé 100 sont indiquées par un rectangle en traits pleins et les étapes facultatives sont indiquées par un rectangle en traits pointillés.

Le procédé 100 est implémenté par ordinateur. Par « implémenté par ordinateur », on entend que les étapes, ou pratiquement toutes les étapes, sont exécutées par au moins un ordinateur ou processeur ou tout autre système similaire. Ainsi, des étapes sont réalisées par l'ordinateur, éventuellement de manière entièrement automatique, ou, semi-automatique. Dans des exemples, le déclenchement d'au moins certaines des étapes de ces méthodes peut être effectué par interaction utilisateur-ordinateur. Le niveau d'interaction utilisateur-ordinateur requis peut dépendre du niveau d'automatisme prévu et mis en balance avec la nécessité de mettre en oeuvre les souhaits de l'utilisateur. Dans des exemples, ce niveau peut être défini par l'utilisateur et/ou prédéfini.

Un exemple typique d'implémentation par ordinateur d'une méthode consiste à exécuter la méthode avec un système adapté à cet effet. Le système ou ordinateur permettant d'implémenter le procédé 100 comprend donc des moyens configurés pour mettre en oeuvre le procédé. Par exemple, le système peut comprendre un processeur couplé à une mémoire, la mémoire ayant enregistré un programme informatique comprenant des instructions pour l'exécution de la méthode. La mémoire peut également stocker une base de données. La mémoire est un matériel adapté à ce type de stockage, comprenant éventuellement plusieurs parties physiques distinctes (par exemple, une pour le programme, et éventuellement une pour la base de données). Le système fournit également un moyen d'affichage, tel qu'un écran, et un moyen d'interaction utilisateur. Le moyen d'interaction utilisateur peut être une souris ou encore un dispositif haptique sensible au toucher qui peut être, sans s'y limiter, un écran tactile, un écran à stylet ou une tablette à stylet. L'écran tactile ou l'écran à stylet peut afficher l'interface utilisateur graphique et donc constituer aussi le moyen d'affichage.

Une première étape 110 du procédé 100 consiste à obtenir une première fonction, une deuxième fonction et une troisième fonction. Le terme « obtenir » signifie dans la présente demande que l'ordinateur implémentant la méthode 100 reçoit et/ou acquiert et/ou calcule la ou les données considérées. Ces données obtenues peuvent donc être fournies par un utilisateur via une interface graphique de l'ordinateur ou encore être envoyées par un autre ordinateur ou un serveur relié à un équipement électrique dont le fonctionnement est modifié à l'aide du procédé 100 ou encore par un équipement électrique, par exemple un équipement électrique dont le fonctionnement est modifié à l'aide du procédé 100, par exemple après avoir reçu une requête de l'ordinateur implémentant le procédé 100, ou par exemple automatiquement. Chaque fonction parmi ces trois fonctions définit un résultat en fonction d'une variable commune. Dit autrement, la première fonction définit un premier résultat à partir d'une variable commune, la deuxième fonction définit un deuxième résultat à partir de la variable commune et la troisième fonction définit un troisième résultat à partir de la variable commune. Par exemple, une première fonction peut fournir la température d'un équipement électrique en fonction d'un horaire de démarrage. Une deuxième fonction peut fournir la puissance mécanique générée par un équipement électrique en fonction de l'horaire de démarrage. Une troisième fonction peut fournir la consommation électrique d'un équipement électrique en fonction de l'horaire de démarrage. Dans cet exemple, la variable commune est l'horaire de démarrage, le premier résultat est la température de l'équipement électrique, le deuxième résultat est la puissance mécanique générée par l'équipement électrique et le troisième résultat est la consommation électrique de l'équipement électrique. Ainsi, le procédé 100 permet de sélectionner un horaire de démarrage en tenant compte des trois résultats.

Dans un exemple, le résultat d'une des trois fonctions peut être calculé à partir du résultat des deux autres fonctions. Par exemple, le troisième résultat peut être calculé à partir du premier résultat et à partir du deuxième résultat. Par « calculé à partir », il est entendu par exemple que le résultat de la troisième fonction est le produit ou le quotient du résultat des première et deuxième fonctions.

Une deuxième étape 120 du procédé 100 consiste à afficher la première fonction, la deuxième fonction et la troisième fonction sous la forme d'une courbe. Une courbe, ou ligne courbe, est un objet similaire à une droite mais non nécessairement linéaire. Ainsi, une courbe est une succession de points. Une sous-partie de la courbe peut être un segment lorsque des points successifs de la courbe sont alignés. Chaque point de la courbe correspond à une valeur de la variable commune. Lorsque la courbe est affichée sur un écran, l'affichage d'un point de la courbe est effectué par un ou plusieurs pixels de l'écran suivant la taille de l'affichage de l'interface graphique utilisateur. La figure 2 montre un exemple de représentation schématique d'une interface graphique utilisateur 200 selon l'invention. L'interface graphique utilisateur 200 comprend une courbe 230 affichée dans un repère comprenant deux axes orthogonaux 210 et 220. Ces axes 210 et 220 sont facultatifs dans l'invention. De plus, ces axes ne sont pas obligatoirement orthogonaux dans l'invention. Chaque point de la courbe 230 est sélectionnable. Comme expliqué ci-dessus, chaque point de la courbe correspond à une valeur de la variable commune. De plus, chaque point de la courbe peut correspondre à chaque valeur entière, ou valeur décimale, de la variable commune. Lorsque la variable commune est un horaire ou une durée, chaque point de la courbe peut être une heure, une minute ou encore une seconde. La sélection peut être effectuée à l'aide d'une première interaction utilisateur. L'affichage est réalisé avec l'écran de l'ordinateur ou du système implémentant le procédé 100.

L'affichage de la courbe est effectué en respectant au moins quatre règles. La première règle est qu'une première coordonnée selon une première dimension d'un point de la courbe est définie selon une valeur du premier résultat. Sur la figure 2, la première dimension est par exemple représentée par l'axe 210. La deuxième règle est qu'une deuxième coordonnée selon une deuxième dimension du point de la courbe est définie selon une valeur du deuxième résultat. Sur la figure 2, la deuxième dimension est par exemple représentée par l'axe 220. La troisième règle est que chaque distance, en suivant la courbe, entre deux points de la courbe est définie selon une différence entre deux valeurs de la variable commune. Dit autrement, la longueur de la courbe entre deux points de la courbe est définie selon une différence entre deux valeurs de la variable commune. Dit autrement, une longueur de la courbe correspond, de manière uniforme pour toute la courbe, à un intervalle de valeurs de la variable commune. Enfin, une première caractéristique graphique de la courbe est définie selon une valeur du troisième résultat. Sur la figure 2, la première caractéristique graphique de la courbe est le type de trait utilisé pour afficher la courbe 230. Par exemple, une première partie de la courbe est en trait plein alors qu'une deuxième partie de la courbe est en tirets courts et la troisième partie de la courbe est en tirets longs. La première caractéristique graphique de la courbe peut alternativement ou additionnellement être une couleur de la courbe et/ou une épaisseur de la courbe. Cette première caractéristique graphique de la courbe peut représenter la valeur du troisième résultat en groupant, selon une règle prédéfinie, les troisièmes valeurs du troisième résultat en différents intervalles. Par règle prédéfinie, il est entendu une règle pouvant être définie par défaut ou par un utilisateur. Par exemple, sur la figure 2, un premier intervalle de troisièmes valeurs du troisième résultat correspond à une première partie de la courbe représentée en tirets longs, un deuxième intervalle de troisièmes valeurs du troisième résultat correspond à une deuxième partie de la courbe représentée en tirets courts et un troisième intervalle de troisièmes valeurs du troisième résultat correspond à une troisième partie de la courbe représentée en un trait plein. De manière alternative, la première caractéristique graphique de la courbe peut représenter la valeur du troisième résultat de manière continue. Dit autrement, chaque troisième valeur unique du troisième résultat est représentée par une première caractéristique graphique de la courbe unique. Ainsi, par exemple, la valeur de l'épaisseur du trait de la courbe peut correspondre à la valeur du troisième résultat. Dit autrement, plus le trait de la courbe est épais, plus la valeur du troisième résultat est élevée.

Une troisième étape 130 optionnelle du procédé 100 consiste à obtenir au moins un intervalle de valeurs de la variable commune. Cet intervalle peut correspondre à un ou des intervalles de valeurs préférentielles de la variable commune selon des règles prédéfinies. Cet intervalle peut aussi correspondre à un ou des intervalles de valeurs obligatoires de la variable commune. Par « préférentielles », il est entendu que le respect de cet intervalle est une contrainte faible. Ainsi, lorsqu'un un ou des intervalles de valeurs de la variable commune sont préférentiels, une valeur de la variable commune compris ou non dans cet ou ces intervalles préférentiels peut être sélectionnée. Par « obligatoires », il est entendu que le respect de cet intervalle est une contrainte forte. Ainsi, lorsqu'un ou des intervalles de valeurs de la variable commune sont obligatoires, seule une valeur de la variable commune compris dans cet ou ces intervalles obligatoires peut être sélectionnée. Par exemple, un ou des premiers intervalles peuvent correspondre à un ou des intervalles de valeurs préférentielles de la variable commune et/ou un ou des deuxièmes intervalles peuvent correspondre à un ou des intervalles de valeurs obligatoires de la variable commune.

Une quatrième étape 140 optionnelle du procédé 100 consiste à afficher au moins une forme géométrique additionnelle définie en fonction du au moins un intervalle de valeurs de la variable commune. Par « additionnelle », il est entendu « en plus de la courbe ». Sur la figure 2, la forme géométrique additionnelle est un rectangle 240. La ou les formes géométriques additionnelles peuvent être différentes formes géométriques par exemple un carré, un cercle ou un ovale. De même, la représentation de la forme peut varier, par exemple pour permettre de distinguer si la forme géométrique additionnelle correspond à un intervalle de valeurs de la variable commune préférentiel ou obligatoire. Ainsi, une deuxième caractéristique graphique de la forme géométrique additionnelle peut être utilisée pour différencier les différentes formes géométriques additionnelles entre elles. La deuxième caractéristique graphique de la forme géométrique additionnelle peut par exemple être choisie parmi une couleur du contour de la forme géométrique additionnelle et/ou une épaisseur du contour de la forme géométrique additionnelle et/ou un type de trait du contour de la forme géométrique additionnelle et/ou une couleur du remplissage de la forme géométrique additionnelle et/ou une transparence du remplissage de la forme géométrique additionnelle. Chaque forme géométrique additionnelle parmi la au moins une forme géométrique est sélectionnable par une deuxième interaction utilisateur.

Une cinquième étape 150 optionnelle du procédé 100 consiste à recevoir une deuxième interaction utilisateur permettant la sélection d'une forme géométrique additionnelle parmi la au moins une forme géométrique additionnelle. Le terme « recevoir » signifie dans la présente demande que l'ordinateur implémentant le procédé reçoit la ou les données. Par « interaction utilisateur », il est entendu tout moyen permettant à l'utilisateur d'interagir avec l'ordinateur. Par exemple, la deuxième interaction utilisateur est une opération de clic du bouton gauche ou droit d'une souris, une opération de double clic du bouton gauche ou droit d'une souris ou encore une pression exercée par un doigt d'une main de l'utilisateur sur un écran tactile.

Une sixième étape 160 optionnelle du procédé 100 comprend un zoom sur une partie de l'interface graphique utilisateur. Par « zoom », il est entendu que la partie de l'affichage de l'interface graphique utilisateur zoomée est agrandie, c'est à dire que sa surface à l'écran est supérieure après le zoom qu'avant le zoom. Le zoom est effectué sur une partie affichée de l'interface graphique utilisateur correspondant à une forme géométrique additionnelle parmi la au moins une forme géométrique additionnelle. « Par « correspondant à », il est entendu que la partie affichée de l'interface graphique utilisateur est identique à la forme géométrique additionnelle correspondante. Par exemple, le zoom peut être effectué sur la forme géométrique additionnelle sélectionnée à l'étape 150. De manière alternative et/ou complémentaire, le zoom peut être initié de manière automatique sur une géométrique additionnelle. Par exemple, lorsqu'il n'y a qu'une seule forme géométrique additionnelle, le zoom peut être initié de manière automatique après un délai prédéterminé. Dans un autre exemple, lorsqu'il y a plusieurs formes géométriques additionnelles, le zoom peut être initié de manière automatique pour chaque forme géométrique additionnelle après un délai prédéterminé respectif. Ainsi, si deux formes géométriques additionnelles sont affichées, un premier zoom peut être initié de manière automatique pour une première forme géométrique additionnelle après un premier délai prédéterminé puis un deuxième zoom peut être initié de manière automatique pour une deuxième forme géométrique additionnelle après un deuxième délai prédéterminé.

Une septième étape 170 du procédé 100 consiste à recevoir une première interaction utilisateur permettant la sélection d'un point de la courbe. Etant donné que chaque point de la courbe correspond à une unique valeur de la variable commune, l'interaction utilisateur reçue à cette étape 170 permet d'identifier une sélection d'une valeur de la variable commune. La première interaction utilisateur est par exemple une opération de clic du bouton gauche ou droit d'une souris, une opération de double clic du bouton gauche ou droit d'une souris ou encore une pression exercée par un doigt d'une main de l'utilisateur sur un écran tactile.

Dans un exemple, compatible avec les exemples précédents, le procédé 100 est utilisé pour la commande d'un équipement électrique. Dans un tel cas, le procédé 100 est un procédé de commande d'un équipement électrique. Dans cet exemple, la variable commune peut être l'horaire de démarrage de l'équipement électrique. La première fonction peut avoir pour premier résultat une quantité de dioxyde de carbone induite par le fonctionnement de l'équipement électrique en fonction de l'horaire de démarrage de l'équipement électrique. La deuxième fonction peut avoir pour deuxième résultat un coût financier induit par le fonctionnement de l'équipement électrique en fonction de l'horaire de démarrage de l'équipement électrique. La troisième fonction peut avoir pour troisième résultat un indice d'efficience, basé sur le coût financier et les émissions de dioxyde de carbone, en fonction de l'horaire de démarrage de l'équipement électrique. Dans cet exemple, un intervalle de valeurs de la variable commune correspond à un intervalle de temps entre deux horaires de démarrage de l'équipement électrique. Un intervalle de temps peut être préférentiel ou obligatoire. De même que précédemment, le terme « préférentiel » signifie que le respect de cet intervalle est une contrainte faible et le terme « obligatoire » signifie que le respect de cet intervalle est une contrainte forte.

Une huitième étape optionnelle 180 du procédé 100 comprend une détermination de l'horaire de démarrage de l'équipement électrique à partir de la sélection de la valeur de la variable commune. Etant donné que chaque valeur de la variable commune correspond à un horaire de démarrage de l'équipement électrique, la sélection d'une valeur de la variable commune permet la détermination de l'horaire de démarrage de l'équipement électrique.

Une neuvième étape optionnelle 190 du procédé 100 est le démarrage de l'équipement électrique à l'horaire de démarrage déterminé. Le démarrage peut par exemple être effectué par l'envoi d'un signal de commande envoyé par l'ordinateur implémentant le procédé 100 à l'équipement électrique.

Dans un exemple, compatible avec les exemples précédents, la valeur de la variable commune d'au moins un point de la courbe est affichée. Par exemple, sur la figure 2, une heure 250 est affichée pour deux points de la courbe. Cet affichage de la valeur de la variable commune d'un point de la courbe peut être effectué suite à une troisième interaction utilisateur. La troisième interaction utilisateur peut par exemple être une opération de passage de souris au-dessus du point de la courbe, une opération de clic du bouton gauche ou droit d'une souris, une opération de double clic du bouton gauche ou droit d'une souris ou encore une pression exercée par un doigt d'une main de l'utilisateur sur un écran tactile. L'affichage peut être réalisé sur un écran affichant l'interface graphique utilisateur ou sur un autre écran.

## Revendications

1. Procédé (100) implémenté par ordinateur de gestion d'une interface graphique utilisateur comprenant :
- obtention (110) d'une première fonction, d'une deuxième fonction et d'une troisième fonction, avec :
∘ la première fonction définissant un premier résultat à partir d'une variable commune,
∘ la deuxième fonction définissant un deuxième résultat à partir de la variable commune, et
∘ la troisième fonction définissant un troisième résultat à partir de la variable commune,
- affichage (120) de la première fonction, de la deuxième fonction et de la troisième fonction sous la forme d'une seule courbe (230), l'affichage de la courbe étant effectué selon les règles suivantes :
∘ une première coordonnée selon une première dimension (210) d'un point de la courbe est définie selon une valeur du premier résultat,
∘ une deuxième coordonnée selon une deuxième dimension (220) du point de la courbe est définie selon une valeur du deuxième résultat,
∘ une distance, en suivant la courbe, entre deux points de la courbe est définie selon une différence entre deux valeurs de la variable commune, et
∘ une première caractéristique graphique de la courbe est définie selon une valeur du troisième résultat.
- réception (170) d'une première interaction utilisateur de sélection d'un point de la courbe, la première interaction utilisateur permettant d'identifier une sélection d'une valeur de la variable commune.

2. Procédé (100) selon l'une quelconque des revendications précédentes dans laquelle la variable commune est un horaire de démarrage d'un équipement électrique, le procédé comprenant en outre :
- déterminer (180) l'horaire de démarrage de l'équipement électrique à partir de la sélection de la valeur de la variable commune, et
- démarrage (190) de l'équipement électrique à l'horaire de démarrage déterminé.

3. Procédé (100) selon l'une quelconque des revendications précédentes dans lequel la première caractéristique graphique de la courbe est une couleur de la courbe et/ou une épaisseur de la courbe et/ou un type de trait de la courbe.

4. Procédé (100) selon l'une des revendications précédentes comprenant après l'affichage (120) de la première fonction, de la deuxième fonction et de la troisième fonction sous la forme d'une courbe :
- obtention (130) d'au moins un intervalle de valeurs de la variable commune, et
- affichage (140) d'au moins une forme géométrique additionnelle définie en fonction du au moins un intervalle de valeurs de la variable commun.

5. Procédé (100) selon la revendication précédente comprenant en outre un zoom (160) sur une partie de de l'interface graphique utilisateur, la partie de l'interface graphique utilisateur correspondant à une forme géométrique additionnelle parmi la au moins une forme géométrique additionnelle.

6. Procédé (100) selon la revendication précédente dans lequel le zoom (160) est :
- initié automatiquement, et/ou
- effectué après la réception (150) d'une deuxième interaction utilisateur de sélection d'une forme géométrique additionnelle parmi la au moins une forme géométrique additionnelle.

7. Procédé (100) selon l'une des revendications 4 à 6 dans lequel le au moins un intervalle de valeurs de la variable commune désigne un au moins un intervalle de temps correspondant aux heures de démarrage préférentielles et/ obligatoires d'un équipement électrique.

8. Système comprenant un moyen d'affichage, un moyen d'interaction utilisateur et des moyens configurés pour mettre en oeuvre un procédé (100) selon l'une des revendications précédentes.

9. Programme d'ordinateur comprenant des instructions qui, lorsque le programme est exécuté par un ordinateur, conduisent celui-ci à mettre en oeuvre un procédé (100) selon l'une des revendications 1 à 7.

10. Support de données lisible par ordinateur, sur lequel est enregistré un programme d'ordinateur selon la revendication 9.
